# EUROPEAN PATENT APPLICATION

(11) **EP 4 753 091 A1**
(43) Date of publication of application: **03.06.2026**
(21) Application number: 23946646.9
(22) Date of filing: 25.07.2023
(51) Int. Cl.: H02H 3/16, H02H 9/02

(54) **POWER GRID PROTECTION SYSTEM**

(71) Applicant: MITSUBISHI ELECTRIC CORPORATION, Chiyoda-ku Tokyo 100-8310 (JP)
(72) Inventor: SAGARA, Yuta, Tokyo 100-8310 (JP); ABE, Tatsuhiro, Tokyo 100-8310 (JP); YAMAGUCHI, Shinichi, Tokyo 100-8310 (JP)
(74) Representative: Meissner Bolte Partnerschaft mbB
(86) International application number: PCT/JP2023/027162
(87) International publication number: WO 2025/022562

(57) **Abstract**

A power grid protection system (100) that protects a power grid (50) including a voltage line (56) through which a current supplied from a secondary-side facility of transformation device flows and a neutral line (55) that has been grounded includes: a circuit breaker (11) installed on the voltage line (56); and a commutator (12) that connects the voltage line (56) and the neutral line (55) on a side of the secondary-side facility of transformation device with respect to the circuit breaker (11), and when an anomaly due to a short-circuit fault or a ground fault occurs in the voltage line (56), a fault current flowing through the voltage line (56) is commutated to the neutral line (55) via the commutator (12).

## Description

### Field

The present disclosure relates to a power grid protection system that protects a power grid when an anomaly due to a short-circuit fault or a ground fault occurs.

### Background

In a power grid that supplies power transformed by a transformation device to a load, a mechanical circuit breaker has been conventionally used to protect the power grid when an anomaly due to a short-circuit fault or a ground fault occurs. However, in the mechanical circuit breaker, interruption of a current is not completed until an arc generated at a time of interruption of the current is extinguished, so that it takes time to interrupt the current, resulting in an increase in a range over which the fault spreads.

Patent Literature 1 discloses a power grid protection system that protects a power grid when an anomaly due to a short-circuit fault or a ground fault occurs. The power grid protection system disclosed in Patent Literature 1 includes a power switch, a bridge circuit installed on a load side with respect to the power switch, and a contactor installed on a load side with respect to the bridge circuit. The power grid protection system disclosed in Patent Literature 1 includes a magnetically-actuated switch, and the magnetically-actuated switch is closed when an anomaly due to a short-circuit fault or a ground fault occurs, and thereby a fault current is commutated to a neutral line. The device disclosed in Patent Literature 1 commutates the fault current to the neutral line to thereby prevent the fault current from flowing through a portion where the short-circuit fault or the ground fault has occurred without using a circuit breaker that interrupts the fault current, and thus can suppress an increase in a range over which the fault spreads.

### Citation List

### Patent Literature

Patent Literature 1: Japanese Translation of PCT International Application Laid-open No. H8-508154

### Summary of Invention

### Problem to be solved by the Invention

However, in the power grid protection system disclosed in Patent Literature 1, although the fault current does not flow through a short-circuit occurring portion by commutation of the fault current to the neutral line, the short-circuit occurring portion is not brought into a no-current state even after the commutation of the fault current. Therefore, it is not possible to open the contactor and disconnect the short-circuit occurring portion only by commutation of the fault current. Accordingly, in the power grid protection system disclosed in Patent Literature 1, unless the fault current is interrupted by another device after the commutation of the fault current, the short-circuit occurring portion cannot be disconnected and the power transmission cannot be resumed. Therefore, the device disclosed in Patent Literature 1 has a problem that it takes time from occurrence of a fault to resumption of power transmission.

The present disclosure has been made in view of the above, and an object thereof is to provide a power grid protection system in which a time from occurrence of an anomaly, due to a short-circuit fault or a ground fault, to resumption of power transmission to a load is shortened.

### Means to Solve the Problem

To solve the above problems and achieve the object a power grid protection system according to the present disclosure is a system configured to protect a power grid that includes: a voltage line through which a current supplied from a secondary-side facility of transformation device flows; and a neutral line that is grounded. The power grid protection system includes: a circuit breaker installed on the voltage line; and a commutator configured to connect the voltage line and the neutral line on a side of the secondary-side facility of transformation device with respect to the circuit breaker. When an anomaly due to a short-circuit fault or a ground fault occurs in the voltage line, a fault current flowing through the voltage line is commutated to the neutral line via the commutator.

### Effects of the Invention

The present disclosure achieves an effect that it is possible to provide a power grid protection system in which a time from occurrence of an anomaly, due to a short-circuit fault or a ground fault, to resumption of power transmission to a load is shortened.

### Brief Description of Drawings

FIG. 1 is a diagram illustrating a configuration of a power grid protection system according to a first embodiment.
FIG. 2 is a functional block diagram of a controller of the power grid protection system according to the first embodiment.
FIG. 3 is a schematic configuration diagram of a tripping mechanism of a circuit breaker of the power grid protection system according to the first embodiment.
FIG. 4 is a diagram illustrating tripping characteristics of the circuit breaker of the power grid protection system according to the first embodiment.
FIG. 5 is a flowchart illustrating a flow of an electromagnetic tripping operation of the circuit breaker of the power grid protection system according to the first embodiment.
FIG. 6 is a diagram illustrating a state where an anomaly due to a short-circuit fault or a ground fault occurs in a branch of a power grid to be protected by the power grid protection system according to the first embodiment.
FIG. 7 is a diagram illustrating a state where semiconductor switches of a commutator of the power grid protection system according to the first embodiment are turned on.
FIG. 8 is a diagram illustrating a state where the semiconductor switches of the commutator of the power grid protection system according to the first embodiment are turned off.
FIG. 9 is a diagram illustrating a first example of transition of a fault current when an anomaly due to a short-circuit fault or a ground fault occurs in the power grid protection system according to the first embodiment.
FIG. 10 is a diagram illustrating a second example of the transition of the fault current when the anomaly due to the short-circuit fault or the ground fault occurs in the power grid protection system according to the first embodiment.
FIG. 11 is a schematic diagram of a current-limiter of the circuit breaker of the power grid protection system according to a modification of the first embodiment.
FIG. 12 is a diagram illustrating a configuration of the power grid protection system according to a second embodiment.
FIG. 13 is a diagram illustrating a configuration of the power grid protection system according to a third embodiment.
FIG. 14 is a diagram illustrating a configuration of the controller of the power grid protection system according to a fourth embodiment.
FIG. 15 is a diagram illustrating a hardware configuration of the controller of the power grid protection systems according to the first to fourth embodiments.

### Description of Embodiments

Hereinafter, a power grid protection system according to each embodiment will be described in detail with reference to the drawings.

### First Embodiment.

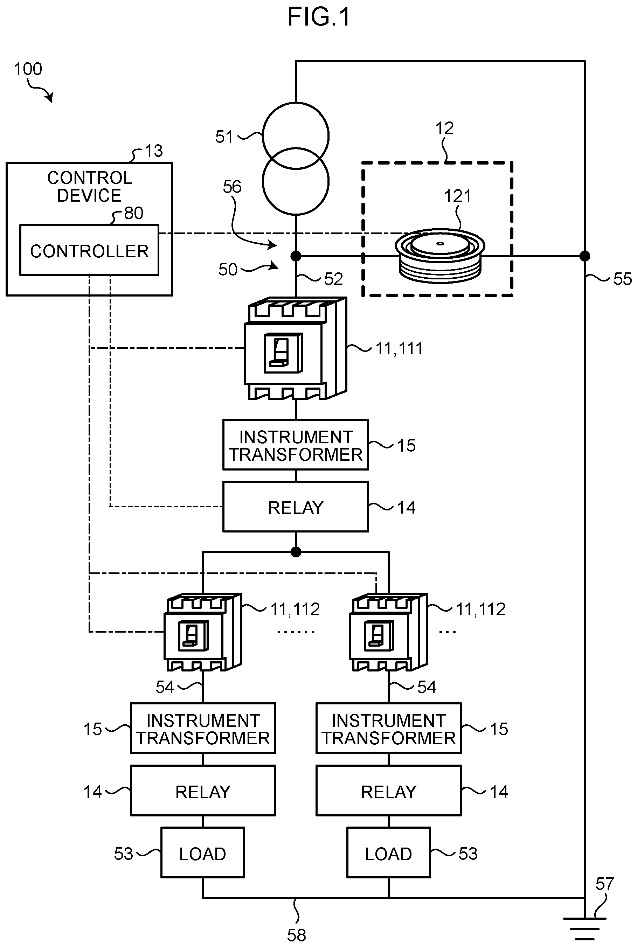

FIG. 1 is a diagram illustrating a configuration of a power grid protection system according to a first embodiment. A power grid protection system 100 according to the first embodiment is a system that protects a power grid 50 that supplies power transformed by a transformation device to a load 53. The power grid 50 to be protected by the power grid protection system 100 includes: a transformer 51 which is a secondary-side facility of transformation device; a voltage line 56; and a neutral line 55. The transformer 51 steps down power supplied from a primary-side facility of transformation device (not illustrated) and supplies the power to the voltage line 56. The voltage line 56 includes: a main grid 52 connected to the transformer 51; a plurality of branches 54 branched from the main grid 52 and connected to respective loads 53; and a ground line 58 that connects the respective loads 53 and ground 57. The power grid protection system 100 includes: a plurality of circuit breakers 11; a commutator 12 installed on an upstream side of the plurality of circuit breakers 11; a control device 13 including a controller 80 that controls the circuit breakers 11 and the commutator 12; and a relay 14 and an instrument transformer 15 installed in each of the circuit breakers 11. The circuit breakers 11 include: a main circuit breaker 111 installed on the main grid 52; and a subordinate circuit breaker 112 provided on each branch 54. The power grid 50 and the power grid protection system 100 constitute a direct-current power distribution system that supplies direct-current power to the loads 53.

The circuit breakers 11 and the commutator 12 included in the power grid protection system 100 are installed on the same switchboard.

The commutator 12 includes a plurality of semiconductor switches 121 connected in series or in parallel, and connects the main grid 52 and the neutral line 55. By connecting the plurality of semiconductor switches 121 in parallel, it is possible to increase a current that can be applied to the commutator 12. In addition, by connecting the plurality of semiconductor switches 121 in series, the withstand voltage of the commutator 12 can be increased. The main circuit breaker 111 and the subordinate circuit breakers 112 are mechanical circuit breakers. When a fault current larger than the rated current flows at a time of occurrence of an anomaly due to a short-circuit fault or a ground fault, the relay 14 transmits an anomaly detection signal to the controller 80. The instrument transformer 15 performs reduction in voltage and current of a current flowing through the main grid 52 or the branch 54, and outputs the current.

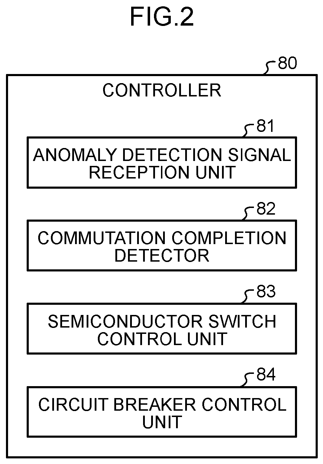

FIG. 2 is a functional block diagram of the controller of the power grid protection system according to the first embodiment. The controller 80 includes: an anomaly detection signal reception unit 81 that receives an anomaly detection signal output by the relay 14 when detecting occurrence of an anomaly due to a short-circuit fault or a ground fault; a commutation completion detector 82 that detects completion of commutation on the basis of the magnitude of a current output from the instrument transformer 15; a semiconductor switch control unit 83 that controls the semiconductor switches 121 of the commutator 12; and a circuit breaker control unit 84 that controls the circuit breakers 11.

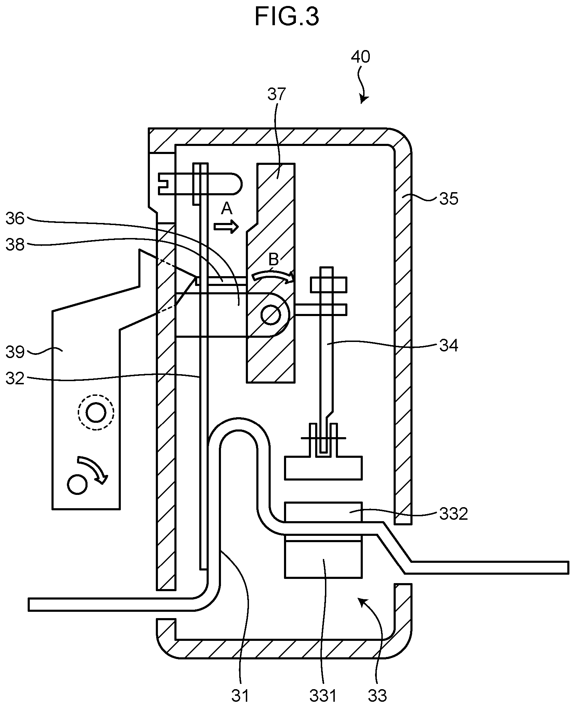

FIG. 3 is a schematic configuration diagram of a tripping mechanism of the circuit breaker of the power grid protection system according to the first embodiment. The circuit breaker 11 includes a tripping mechanism 40 including: a heating resistor 31; a bimetal 32 attached to the heating resistor 31; an electromagnet 33 including a fixed core 331 and a movable core 332; a tripping rod 34 fixed to the movable core 332; a mold case 35; and a common tripping shaft 37 rotatably supported by a support arm 36 inside the mold case 35. The tripping mechanism 40 also includes a latch 38 protruding from the common tripping shaft 37 and a roller trigger 39 engaging the latch 38. The tripping mechanism 40 of the circuit breaker 11 is of a magnetothermal type that performs thermal tripping by the bimetal 32 and electromagnetic tripping by the electromagnet 33.

When the temperature of the bimetal 32 rises due to Joule heat generated in the heating resistor 31 due to an overcurrent flowing therethrough, the bimetal 32 is bent in a direction of an arrow A and rotates the common tripping shaft 37 in a direction of an arrow B. When the common tripping shaft 37 rotates in the direction of the arrow B, engagement between the latch 38 and the roller trigger 39 is released, and the circuit breaker 11 trips.

In a case where a large current such as a short-circuit current flows as an overcurrent, the current flows to the movable core 332, and the movable core 332 is attracted to the fixed core 331. At that time, the tripping rod 34 fixed to the movable core 332 comes into contact with a protrusion provided on the common tripping shaft 37, and rotates the common tripping shaft 37 in the direction of the arrow B. When the common tripping shaft 37 rotates in the direction of the arrow B, engagement between the latch 38 and the roller trigger 39 is released, and the circuit breaker 11 trips. The circuit breaker 11 used as the subordinate circuit breaker 112 includes a detector (not illustrated) that detects a fault current flowing due to a short-circuit fault or a ground fault, and the circuit breaker 11 detects the occurrence of the fault by itself and performs an electromagnetic tripping operation. The circuit breaker 11 used as the main circuit breaker 111 does not include the detector that detects a fault current flowing due to a short-circuit fault or a ground fault, and performs an electromagnetic tripping operation when receiving a trip command output from the circuit breaker control unit 84. Note that the circuit breaker 11 including the detector (not illustrated) that detects a fault current flowing due to a short-circuit fault or a ground fault may be used as the main circuit breaker 111. In that case, the controller 80 can have a configuration without the circuit breaker control unit 84.

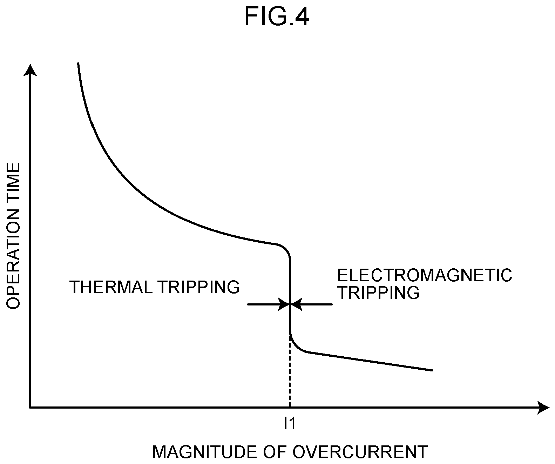

FIG. 4 is a diagram illustrating tripping characteristics of the circuit breaker of the power grid protection system according to the first embodiment. In the circuit breaker 11, a thermal tripping operation by the bimetal is performed in a case where the magnitude of the overcurrent is less than or equal to a current I1, and the electromagnetic tripping by the electromagnet is performed in a case where the magnitude of the overcurrent exceeds the current I1. Since the thermal tripping is performed by transfer of Joule heat generated in the heating resistor 31 to the bimetal 32, an operation time is longer than that of the electromagnetic tripping.

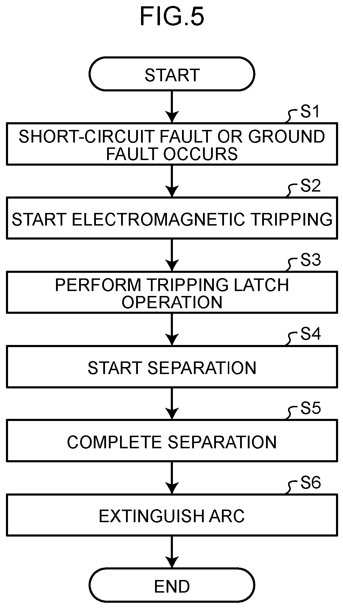

FIG. 5 is a flowchart illustrating a flow of an electromagnetic tripping operation of the circuit breaker of the power grid protection system according to the first embodiment. In step S1, a short-circuit fault or a ground fault occurs, and a fault current flows. In step S2, a current flows to the movable core 332 to start electromagnetic tripping. In step S3, the tripping rod 34 fixed to the movable core 332 rotates the common tripping shaft 37 to thereby perform a tripping latch operation of releasing engagement between the latch 38 and the roller trigger 39. In step S4, the roller trigger 39 is rotated by the tripping latch operation, and a movable contact (not illustrated) starts to be separated from a fixed contact (not illustrated). At that time, an arc is generated between the movable contact and the fixed contact. In step S5, the movable contact moves to a preset position, and thereby the separation between the movable contact and the fixed contact is completed, and the arc is extended. In step S6, the extended arc is extinguished, and thereby interruption of the current is completed. In the above operation, an opening time is a time from the occurrence of the short-circuit fault or the ground fault to the start of the separation of the contact in step S4.

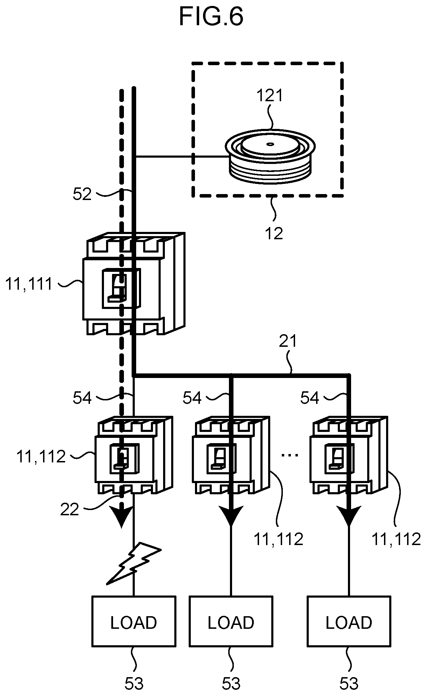

FIG. 6 is a diagram illustrating a state where an anomaly due to a short-circuit fault or a ground fault occurs in a branch of the power grid to be protected by the power grid protection system according to the first embodiment. In FIG. 6, only a part of the power grid protection system 100 is illustrated, and the relays 14, the instrument transformers 15, and the like are not illustrated. When an anomaly due to a short-circuit fault or a ground fault occurs in one of the branches 54, a current flows without passing through the load 53, and thereby a fault current 22 which is a current larger than the rated current 21 flows through the branch 54 in which the anomaly due to the short-circuit fault or the ground fault has occurred. When detecting the fault current 22, the relay 14 notifies the controller 80 of the occurrence of the anomaly due to the short-circuit fault or the ground fault. In addition, the subordinate circuit breaker 112 installed on the branch 54 in which the anomaly due to the short-circuit fault or the ground fault has occurred detects the short-circuit fault or the ground fault, and performs a trip operation by electromagnetic tripping.

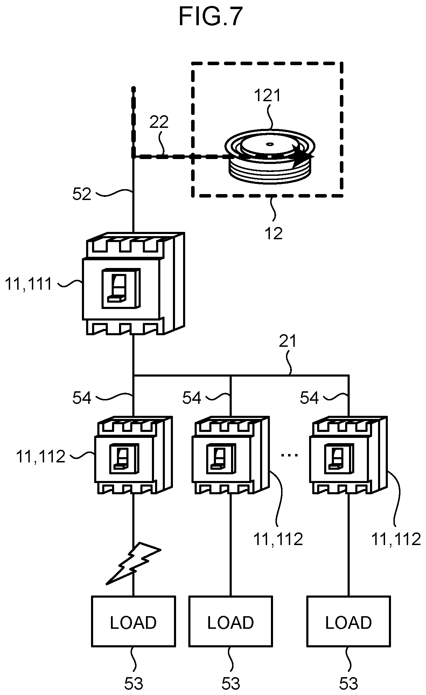

The controller 80 that has been notified of the occurrence of the anomaly due to the short-circuit fault or the ground fault outputs a command to turn on the semiconductor switches 121 to the commutator 12. For example, when detecting that the circuit breaker 11 is opened due to the short-circuit fault or the ground fault, the controller 80 outputs a command to turn on the semiconductor switches 121 to the commutator 12. FIG. 7 is a diagram illustrating a state where the semiconductor switches of the commutator of the power grid protection system according to the first embodiment are turned on. In FIG. 7, only a part of the power grid protection system 100 is illustrated, and the relays 14, the instrument transformers 15, and the like are not illustrated. When commutating the fault current to the neutral line 55 (not illustrated in FIG. 7), the commutator 12 is turned on at least when the circuit breaker 11 detects the occurrence of a short-circuit fault or a ground fault. For example, when commutating the fault current to the neutral line 55, the commutator 12 is turned on at least when detecting that the circuit breaker 11 is opened. Since the semiconductor switches 121 operate at a higher speed than a mechanical switch, even if the controller 80 simultaneously outputs commands to the commutator 12 and the subordinate circuit breaker 112, the operation of turning on the semiconductor switches 121 of the commutator 12 is performed before the trip operation of the subordinate circuit breaker 112. That is, at a point in time when the trip operation of the subordinate circuit breaker 112 is performed, the semiconductor switches 121 of the commutator 12 are already turned on, the fault current 22 is commutated to the neutral line 55, and the current flowing through the branch 54 is smaller than the fault current 22. Therefore, in the trip operation of the subordinate circuit breaker 112, no arc is generated, or only a weak arc is generated. Therefore, it is possible to suppress deterioration of the subordinate circuit breaker 112 due to the trip operation.

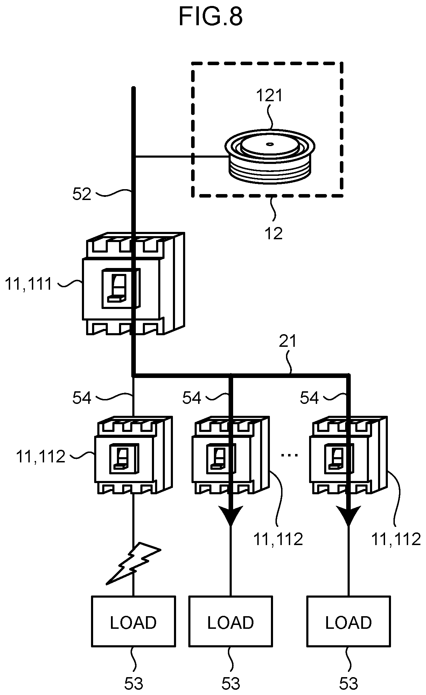

After the trip of the subordinate circuit breaker 112 is completed, the controller 80 turns off the semiconductor switches 121 of the commutator 12. FIG. 8 is a diagram illustrating a state where the semiconductor switches of the commutator of the power grid protection system according to the first embodiment are turned off. In FIG. 8, only a part of the power grid protection system 100 is illustrated, and the relays 14, the instrument transformers 15, and the like are not illustrated. Since the subordinate circuit breaker 112 installed on the branch 54 in which the anomaly due to the short-circuit fault or the ground fault has occurred is in a trip state, no current flows through the branch 54 in which the anomaly due to the short-circuit fault or the ground fault has occurred. Consequently, the rated current 21 flows only through the branches 54 and the main grid 52 in which the anomaly due to the short-circuit fault or the ground fault has not occurred.

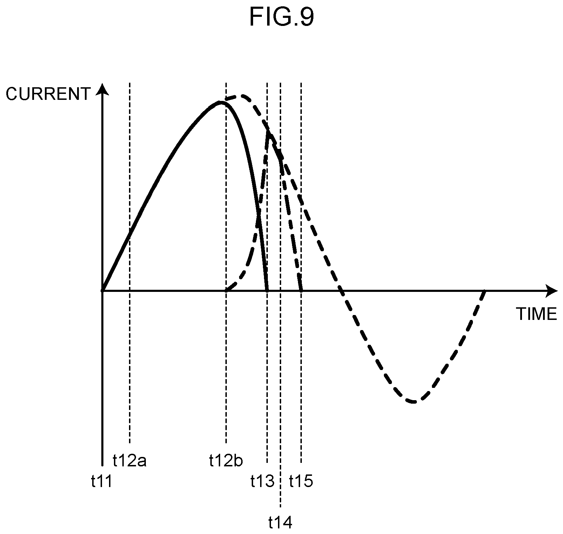

A time from the detection of the fault current by the relay 14 to the output of the command to turn on the semiconductor switches 121 of the commutator 12 is preferably less than 1/4 cycle of the frequency of the current flowing through the power grid 50. FIG. 9 is a diagram illustrating a first example of transition of a fault current when an anomaly due to a short-circuit fault or a ground fault occurs in the power grid protection system according to the first embodiment. In FIG. 9, a solid line indicates a current flowing through the circuit breaker 11 installed on the main grid 52 or the branch 54 in which the anomaly has occurred due to the short-circuit fault or the ground fault, a dash-dot line indicates a current flowing through the semiconductor switches 121 of the commutator 12, and a dashed line indicates a current flowing through a circuit breaker at a time of fault current interruption in a power grid protection system that interrupts a fault current by a mechanical circuit breaker. In the first example illustrated in FIG. 9, the time from the detection of the fault current by the relay 14 to the output of the command to turn on the semiconductor switches 121 of the commutator 12 is 1/4 cycle or more of the frequency of the current flowing through the power grid 50. When an anomaly due to a short-circuit fault or a ground fault occurs at time t11, the subordinate circuit breaker 112 detects the occurrence of the short-circuit fault or the ground fault at time t12a, and starts a trip operation by electromagnetic tripping. At time t12b, the controller 80 outputs a command to turn on the semiconductor switches 121 to the commutator 12. Therefore, from time t12b, the current flowing through the semiconductor switches 121 increases, and the current flowing through the subordinate circuit breaker 112 decreases. The trip operation of the subordinate circuit breaker 112 is completed at time t13. The instrument transformer 15 that has detected that the current is no longer flowing through the subordinate circuit breaker 112 notifies the controller 80 that the commutation of the fault current has been completed, and thereby the controller 80 outputs a command to turn off the semiconductor switches 121 to the commutator 12 at time t14. Therefore, from time t14, the current flowing through the semiconductor switches 121 decreases. At time t15 at which there is an increase, the operation of turning off the semiconductor switches 121 is completed. Since the subordinate circuit breaker 112 trips, even if the semiconductor switches 121 of the commutator 12 are turned off, no current flows through a portion where the anomaly due to the short-circuit fault or the ground fault has occurred.

As illustrated in FIG. 9, when the time from the detection of the fault current by the relay 14 to the output of the command to turn on the semiconductor switches 121 of the commutator 12 is 1/4 cycle or more of the frequency of the current flowing through the power grid 50, the current flowing through the subordinate circuit breaker 112 becomes maximum before the commutation of the fault current is started. Accordingly, when the time from the detection of the fault current by the relay 14 to the output of the command to turn on the semiconductor switches 121 of the commutator 12 is 1/4 cycle or more of the frequency of the current flowing through the power grid 50, it is necessary to use, as a subordinate circuit breaker, a circuit breaker having an interrupting capacity equivalent to that of a subordinate circuit breaker of a power grid protection system in which a commutator is not provided.

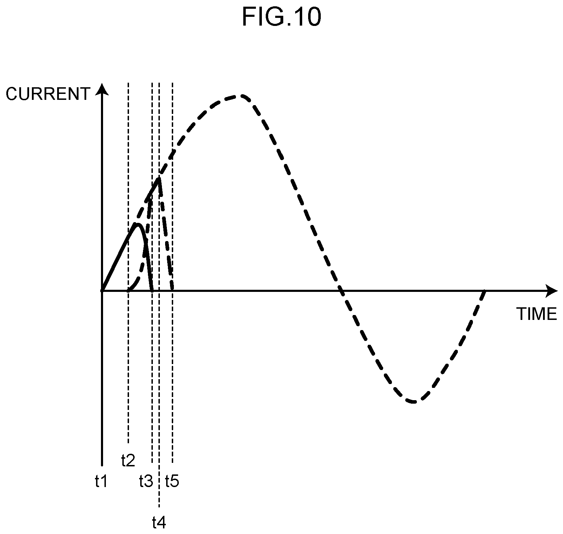

FIG. 10 is a diagram illustrating a second example of the transition of the fault current when the anomaly due to the short-circuit fault or the ground fault occurs in the power grid protection system according to the first embodiment. In FIG. 10, a solid line indicates a current flowing through the circuit breaker 11 installed on the main grid 52 or the branch 54 in which the anomaly has occurred due to the short-circuit fault or the ground fault, a dash-dot line indicates a current flowing through the semiconductor switches 121 of the commutator 12, and a dashed line indicates a current flowing through a circuit breaker at a time of fault current interruption in a power grid protection system that interrupts a fault current by a mechanical circuit breaker. When an anomaly due to a short-circuit fault or a ground fault occurs at time t1, the subordinate circuit breaker 112 detects the occurrence of the short-circuit fault or the ground fault at time t2, and starts a trip operation by electromagnetic tripping. The controller 80 outputs a command to turn on the semiconductor switches 121 to the commutator 12. Therefore, from time t2, the current flowing through the semiconductor switches 121 increases, and the current flowing through the subordinate circuit breaker 112 decreases. The trip operation of the subordinate circuit breaker 112 is completed at time t3. The instrument transformer 15 that has detected that the current is no longer flowing through the subordinate circuit breaker 112 notifies the controller 80 that the commutation of the fault current has been completed, and thereby the controller 80 outputs a command to turn off the semiconductor switches 121 to the commutator 12 at time t4. Therefore, from time t4, the current flowing through the semiconductor switches 121 decreases. At time t5 at which there is an increase, the operation of turning off the semiconductor switches 121 is completed. Since the subordinate circuit breaker 112 trips, even if the semiconductor switches 121 of the commutator 12 are turned off, no current flows through a portion where the anomaly due to the short-circuit fault or the ground fault has occurred. Therefore, power transmission is normally resumed in the branches 54 other than the branch 54 in which the anomaly due to the short-circuit fault or the ground fault has occurred. In the power grid protection system 100 according to the first embodiment, since a maximum value of the current flowing through the subordinate circuit breaker 112 is smaller than a maximum value of a current flowing through a subordinate circuit breaker in a power grid protection system in which a commutator is not provided, it is possible to use a small circuit breaker having a lower interrupting capacity than the power grid protection system in which the commutator is not provided.

The commutator 12 can aggregate the interrupting capacities which the circuit breakers 11 individually have, and the interrupting capacity of the entirety of the power grid protection system 100 can be easily adjusted by changing the number of commutators 12 in parallel/series. In addition, since the circuit breaker 11 having a high interrupting capacity is unnecessary in the power grid protection system 100, the number of models of the circuit breakers 11 can be reduced by unifying the models of the circuit breakers 11. Unifying the models of the circuit breakers 11 eliminates the necessity to select a model of the circuit breaker 11, which enables board design to be standardized. In addition, in a case where the interrupting capacity of the power grid protection system 100 is increased, it is not necessary to replace all the circuit breakers 11, and it is only necessary to adjust the number of commutators 12 only in parallel/series, so that the interrupting capacity of the entirety of the power grid protection system 100 can be easily increased.

In the above description, the case where the anomaly due to the short-circuit fault or the ground fault has occurred in the branch 54 has been described as an example. In a case where the anomaly due to the short-circuit fault or the ground fault has occurred in the main grid 52, when the relay 14 installed on the main grid 52 detects the occurrence of the anomaly due to the short-circuit fault or the ground fault, the controller 80 causes the main circuit breaker 111 to trip and turns on the semiconductor switches 121 of the commutator 12, and thereby the fault current can be commutated and the short-circuit occurring portion can be disconnected.

In a case of providing a plurality of power grids 50 corresponding to respective phases of a three-phase alternating-current, the controller 80 turns on the semiconductor switches 121 of the commutators 12 of the power grids 50 corresponding to two phases in which the short-circuit fault occurs in a case of two-phase short circuit, and turns on the semiconductor switches of the commutators 12 of the power grids 50 corresponding to three phases in a case of three-phase short circuit, and thereby the fault current can be commutated and the short-circuit occurring portion can be disconnected only in the phases in which the short-circuit fault has occurred.

Since the operation speed of the semiconductor switches 121 is higher than the operation speed of a mechanical switch, the power grid protection system 100 according to the first embodiment can prevent the fault current from flowing to the portion where the anomaly has occurred faster than in a case of using a mechanical circuit breaker, and can prevent an increase in a range over which the fault spreads. In addition, after the commutation of the fault current, the portion where the short-circuit fault has occurred can be disconnected by interrupting the rated current by the subordinate circuit breaker 112 installed on the branch 54 in which the anomaly due to the short-circuit fault or the ground fault has occurred. Since the main circuit breaker 111 and the subordinate circuit breaker 112 do not need to interrupt the fault current and are only required to be able to interrupt the rated current, it is possible to reduce the power grid protection system 100 in size by using a small circuit breaker having a low interrupting capacity. Furthermore, since the main circuit breaker 111 and the subordinate circuit breaker 112 do not interrupt the fault current, it is easy to comply with the protection cooperation of "there is no damage except light welding of an electromagnetic switch, and continuously usable without replacement", as defined in IEC 60947-1, Coordination of the components of the motor circuit, type2, which is a standard defined by the International Electrotechnical Commission.

In addition, since the semiconductor switches 121 of the commutator 12 are normally in an off state and are turned on only when an anomaly due to a short-circuit fault or a ground fault occurs, it is not necessary to provide a facility for cooling.

In the power grid protection system 100 according to the first embodiment, after the completion of the commutation of the fault current, the current flowing to the portion where the anomaly has occurred can be interrupted by the circuit breaker 11 installed on the main grid 52 or the branch 54 in which the anomaly due to the short-circuit fault or the ground fault has occurred, so that the power transmission to the load 53 can be resumed in a short time from the occurrence of the anomaly due to the short-circuit fault or the ground fault.

In the above description, the commutator 12 using the semiconductor switches 121 has been described as an example, but the commutator 12 can also be configured by using a mechanical switch capable of operating at a speed higher than 1/4 cycle of the frequency of the current flowing through the power grid 50.

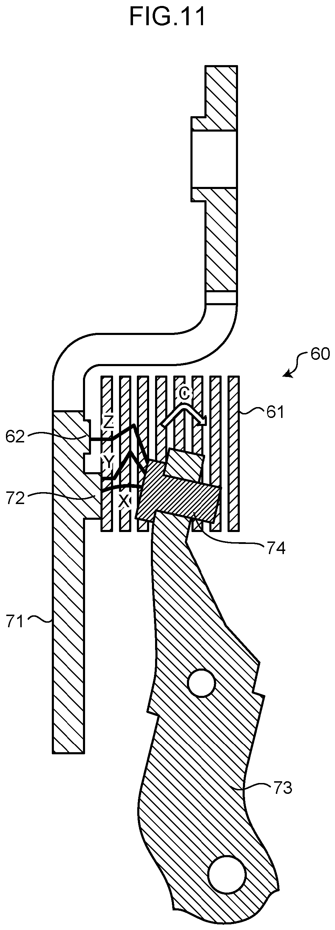

The circuit breaker 11 may include a current-limiter that limits a fault current flowing upon occurrence of a short-circuit fault or a ground fault. FIG. 11 is a schematic diagram of a current-limiter of the circuit breaker of the power grid protection system according to a modification of the first embodiment. A current-limiter 60 includes a grid 61 installed around a fixed contact 72 provided on a fixed contactor 71, and a protrusion 62 provided on the fixed contactor 71. The grid 61 is configured by disposing a plurality of insulating members at narrow intervals. When a fault current flows upon occurrence of a short-circuit fault or a ground fault, an electromagnetic repulsive force acts between a movable contactor 73 and the fixed contactor 71, and the movable contactor 73 rotates in a direction of an arrow C, and thereby a movable contact 74 provided on the movable contactor 73 is separated from the fixed contact 72, and an arc is generated between the movable contact 74 and the fixed contact 72 as indicated by a line X in FIG. 11. The arc generated between the movable contact and the fixed contact is attracted to the grid 61 as indicated by a line Y in FIG. 11, and an arc spot is forcibly reduced to narrow an arc column. Thereafter, as indicated by a line Z in FIG. 11, the arc spot of the fixed contact 72 is commutated to the protrusion 62 at a high speed, and the arc is cooled by the grid 61. Thereafter, the main body of the circuit breaker 11 performs a trip operation, and the interruption is completed.

In a case where the circuit breaker 11 includes the current-limiter 60, the controller 80 may detect automatic opening of the current-limiter 60 and issue an ON command to the commutator 12. In that case, the commutator 12 can be turned on at an earlier timing than in the case of detecting opening of the circuit breaker 11, and a time required for commutation and interruption can be shortened by the effect of the current-limiter 60.

### Second Embodiment.

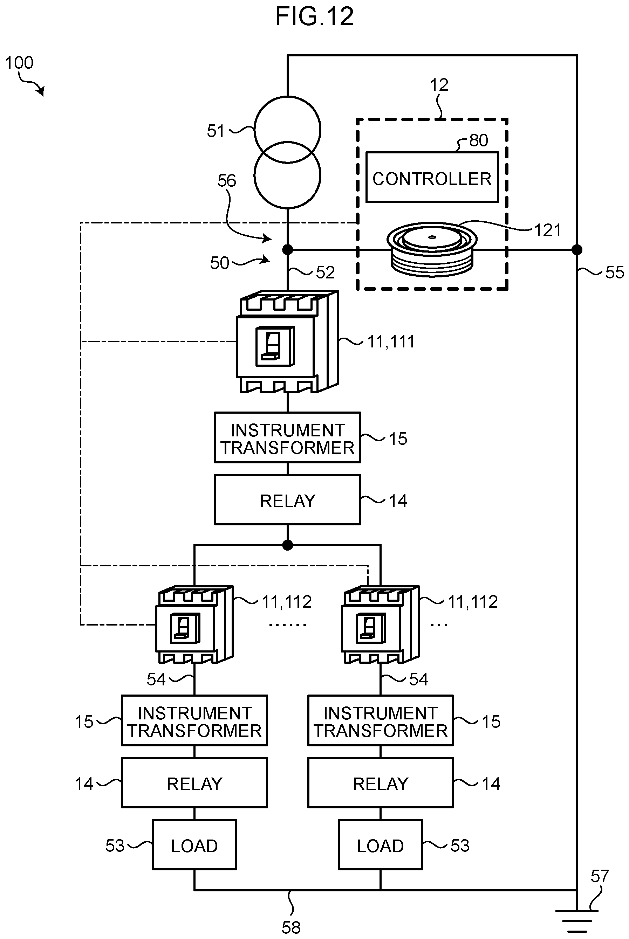

FIG. 12 is a diagram illustrating a configuration of the power grid protection system according to a second embodiment. The power grid protection system 100 according to the second embodiment is different from the power grid protection system 100 according to the first embodiment in that the controller 80 is provided in the commutator 12. The rest of the configuration is similar to that of the power grid protection system 100 according to the first embodiment, and thus a redundant description will be omitted.

In the power grid protection system 100 according to the second embodiment, since the controller 80 is provided in the commutator 12, a signal line connecting the controller 80 and the semiconductor switches 121 is short, and a delay in transmitting a command to turn on or off the semiconductor switches 121 from the controller 80 to the semiconductor switches 121 is small. Therefore, it is possible to shorten a time required from the occurrence of the anomaly due to the short-circuit fault or the ground fault to the commutation of the fault current.

### Third Embodiment.

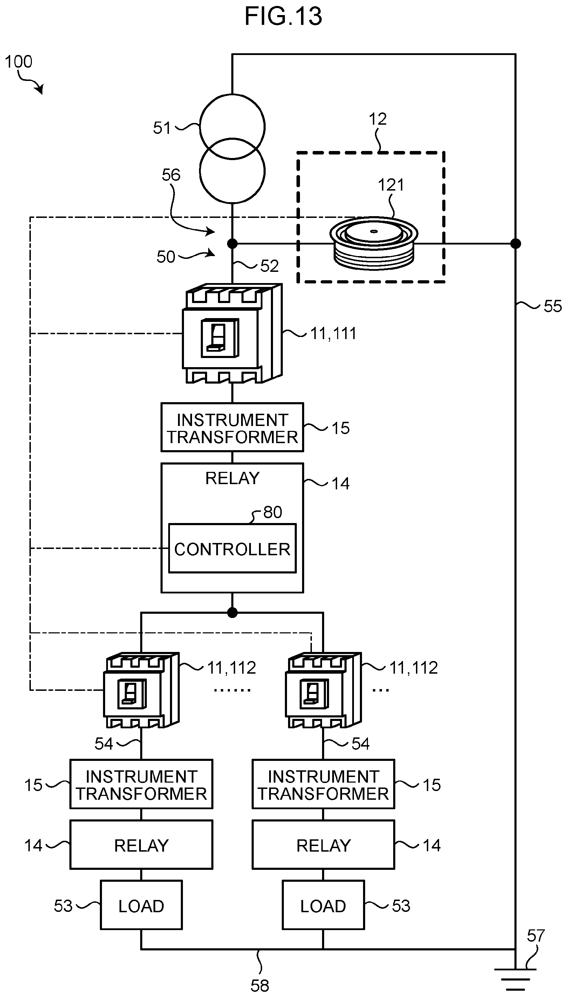

FIG. 13 is a diagram illustrating a configuration of the power grid protection system according to a third embodiment. The power grid protection system 100 according to the third embodiment is different from the power grid protection system 100 according to the first embodiment in that the controller 80 is provided in the relay 14. The controller 80 is provided, on the voltage line 56, in the relay 14 installed on the main grid 52 or the branch 54 in which a short-circuit fault or a ground fault is highly likely to occur. In the third embodiment, the controller 80 is provided in the relay 14 installed on the main grid 52. The rest of the configuration is similar to that of the power grid protection system 100 according to the first embodiment, and thus a redundant description will be omitted.

In the power grid protection system 100 according to the third embodiment, since the controller 80 is provided in the relay 14, a signal line connecting the controller 80 and the relay 14 is short, and a delay in transmitting a fault detection signal from the relay 14 to the controller 80 is small. Therefore, it is possible to shorten a time required from the occurrence of the anomaly due to the short-circuit fault or the ground fault to the commutation of the fault current.

### Fourth Embodiment.

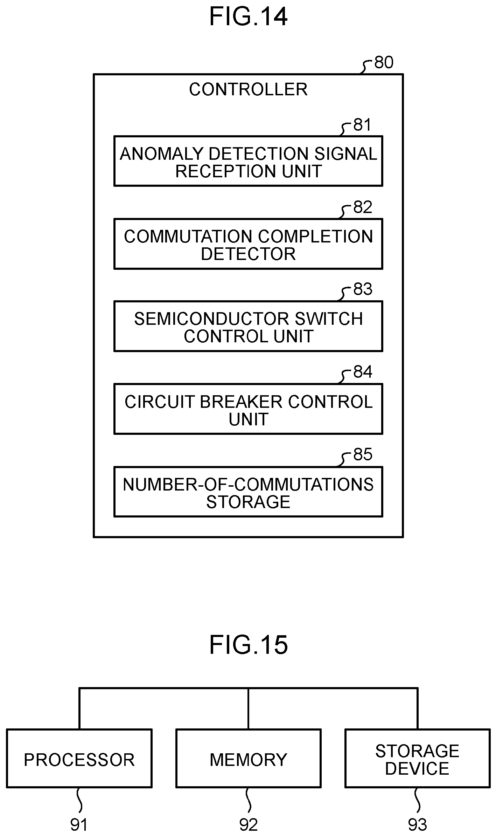

FIG. 14 is a diagram illustrating a configuration of the controller of the power grid protection system according to a fourth embodiment. The power grid protection system 100 according to the fourth embodiment is different from the power grid protection system 100 according to the first embodiment in that the controller 80 includes a number-of-commutations storage 85. The rest of the configuration is similar to that of the power grid protection system 100 according to the first embodiment, and thus a redundant description will be omitted.

The number-of-commutations storage 85 is configured to store the number of times of outputting a command to turn on the semiconductor switches 121 to the commutator 12.

In a case where an anomaly due to a short-circuit fault or a ground fault occurs and a fault current flows through the voltage line 56, a large current exceeding the rated current flows, and thus, there is a possibility of degradation of the main grid 52 and the branches 54, degradation of the loads 53, and degradation of the circuit breakers 11, the relays 14, the instrument transformers 15, and the like.

In a case where a fault current is interrupted by a mechanical circuit breaker, there occur traces of, for example, melting of a part of a contact portion of the circuit breaker caused by an arc generated at the time of current interruption, and thus it is possible to recognize afterwards the interruption of the fault current by the circuit breaker. Therefore, it is possible for a user of the power grid protection system using the mechanical circuit breaker to find a trace of the fault current, even not immediately after the occurrence of the anomaly due to the short-circuit fault or the ground fault, at a time of maintenance of the power grid protection system, and to replace the voltage line 56 and the like. On the other hand, in the power grid protection system 100 according to the third embodiment, since the commutator 12 commutates the fault current to the neutral line 55, the fault current is not interrupted in the circuit breaker 11, and no trace of the fault current is left in the circuit breaker 11. However, in the power grid protection system 100 according to the third embodiment, since the number of times of outputting a command to turn on the semiconductor switches 121 to the commutator 12 is stored in the number-of-commutations storage 85, a user of the power grid protection system 100 can recognize afterwards, by checking the number of times stored in the number-of-commutations storage 85, that the anomaly due to the short-circuit fault or the ground fault has occurred in the voltage line 56. Accordingly, it is possible for the user of the power grid protection system 100 according to the third embodiment to find a trace of the fault current, even not immediately after the occurrence of the short-circuit fault or the ground fault, at a time of maintenance of the power grid protection system 100, and to replace the voltage line 56 and the like.

FIG. 15 is a diagram illustrating a hardware configuration of the controller of the power grid protection systems according to the first to fourth embodiments. The controller 80 is realized by a computer system including a processor 91 that executes various processes, a memory 92 which is a main memory, and a storage device 93 that stores information.

The processor 91 may be an arithmetic means such as an arithmetic device, a microprocessor, a microcomputer, a central processing unit (CPU), or a digital signal processor (DSP). As the memory 92, a nonvolatile or volatile semiconductor memory such as a random access memory (RAM), a read only memory (ROM), a flash memory, an erasable programmable read only memory (EPROM), or an electrically erasable programmable read only memory (EEPROM (registered trademark)) can be used. The storage device 93 stores a program for executing a process of controlling the commutator 12 and the circuit breakers 11.

In the above computer system, the processor 91 reads a program corresponding to a process of each component stored in the storage device 93 into the memory 92 and executes the program, thereby realizing a function of the control device 13. The memory 92 is also used as a temporary memory in each process executed by the processor 91. The program executed by the processor 91 may be provided in a state of being stored in a storage medium, or may be provided via a network.

The configurations described in the embodiments above are merely examples of the content and can be combined with other known technology and part of the configurations can be omitted or modified without departing from the gist thereof.

### Reference Signs List

11 circuit breaker; 12 commutator; 13 control device; 14 relay; 15 instrument transformer; 21 rated current; 22 fault current; 31 heating resistor; 32 bimetal; 33 electromagnet; 34 tripping rod; 35 mold case; 36 support arm; 37 common tripping shaft; 38 latch; 39 roller trigger; 40 tripping mechanism; 50 power grid; 51 transformer; 52 main grid; 53 load; 54 branch; 55 neutral line; 56 voltage line; 57 ground; 58 ground line; 60 current-limiter t; 61 grid; 62 protrusion; 71 fixed contactor; 72 fixed contact; 73 movable contactor; 74 movable contact; 80 controller; 81 anomaly detection signal reception unit; 82 commutation completion detector; 83 semiconductor switch control unit; 84 circuit breaker control unit; 85 number-of-commutations storage; 91 processor; 92 memory; 93 storage device; 100 power grid protection system; 111 main circuit breaker; 112 subordinate circuit breaker; 121 semiconductor switch; 331 fixed core; 332 movable core.

## Claims

1. A power grid protection system configured to protect a power grid including:
a voltage line through which a current supplied from a secondary-side facility of transformation device flows; and
a neutral line that is grounded, the power grid protection system comprising:
a circuit breaker installed on the voltage line; and
a commutator configured to connect the voltage line and the neutral line on a side of the secondary-side facility of transformation device with respect to the circuit breaker, wherein
when an anomaly due to a short-circuit fault or a ground fault occurs in the voltage line, a fault current flowing through the voltage line is commutated to the neutral line via the commutator.

2. The power grid protection system according to claim 1, wherein
when commutating the fault current to the neutral line, the commutator is turned on at least when the circuit breaker detects occurrence of the short-circuit fault or the ground fault.

3. The power grid protection system according to claim 2, wherein
when commutating the fault current to the neutral line, the commutator is turned on at least when detecting that the circuit breaker is opened.

4. The power grid protection system according to claim 2, wherein
the commutator is configured to start commutation of the fault current to the neutral line before the circuit breaker is opened.

5. The power grid protection system according to any one of claims 1 to 4, wherein
the commutator is configured to commutate the fault current to the neutral line within a time less than 1/4 cycle of a frequency of a current flowing through the voltage line after occurrence of an anomaly due to the short-circuit fault or the ground fault in the voltage line.

6. The power grid protection system according to any one of claims 1 to 5, wherein
the voltage line includes:
a main grid connected to the secondary-side facility of transformation device; and
a plurality of branches branching from the main grid,
the circuit breaker includes:
a main circuit breaker installed on the main grid; and
a subordinate circuit breaker installed on each of the branches, and
the commutator is configured to connect the main grid and the neutral line on a side of the secondary-side facility of transformation device with respect to the main circuit breaker.

7. The power grid protection system according to any one of claims 1 to 6, wherein
the commutator includes a plurality of semiconductor switches connected in parallel or in series.

8. The power grid protection system according to any one of claims 1 to 7, wherein
the power grid protection system includes a commutation completion detector configured to detect completion of commutation of the fault current to the neutral line.

9. The power grid protection system according to any one of claims 1 to 8, wherein
the power grid protection system includes a controller configured to control the commutator and the circuit breaker.

10. The power grid protection system according to claim 9, comprising:
a relay configured to monitor a current flowing through the voltage line, wherein
the controller is provided in the relay.

11. The power grid protection system according to any one of claims 1 to 10, wherein
the power grid protection system includes a number-of-commutations storage configured to store a number of times the commutator commutates the fault current to the neutral line.

12. The power grid protection system according to any one of claims 1 to 11, wherein
the circuit breaker and the commutator are installed on a same transformation board.
